(19) **Europäisches Patentamt**

**European Patent Office**

**Office européen des brevets**

(11) **EP 0 717 070 B1**

(12) **EUROPÄISCHE PATENTSCHRIFT**

(45) Veröffentlichungstag und Bekanntmachung des Hinweises auf die Patenterteilung:
**11.04.2001 Patentblatt 2001/15**

(51) Int Cl.⁷: **C08K 5/103**, C08L 1/18

(21) Anmeldenummer: **95119055.2**

(22) Anmeldetag: **04.12.1995**

(54) **Lackbindemittelzubereitungen, deren Herstellung und Verwendung**

Binder compositions for lacquers, their preparation and use

Compositions de liants pour vernis, leur préparation et utilisation

(84) Benannte Vertragsstaaten:
**DE ES FR GB**

(30) Priorität: **15.12.1994 DE 4444743**

(43) Veröffentlichungstag der Anmeldung:
**19.06.1996 Patentblatt 1996/25**

(73) Patentinhaber: **WOLFF WALSRODE AG**
**29655 Walsrode (DE)**

(72) Erfinder:
• **Dannhorn, Wolfgang, Dr.**
**D-29664 Walsrode (DE)**
• **Hecht, Reinhold, Dr.**
**D-29683 Fallingsbostel (DE)**
• **Hoppe, Lutz, Dr.**
**D-29664 Walsrode (DE)**
• **Lühman, Erhard**
**D-29699 Bomlitz (DE)**
• **Näder, Reinhard, Dr.**
**D-29664 Walsrode (DE)**

(74) Vertreter: **Braun, Rolf, Dr. et al**
**Bayer AG,**
**Konzernbereich RP,**
**Patente und Lizenzen**
**51368 Leverkusen (DE)**

(56) Entgegenhaltungen:
**US-A- 1 456 782**     **US-A- 2 032 091**
**US-A- 2 046 852**     **US-A- 2 381 247**

**Beschreibung**

Die vorliegende Erfindung betrifft neue Cellulosenitrat-Weichmacherkombinationen, die sich durch ein verblockungsfreies, rieselfähiges Verhalten auszeichnen.

Nitrocellulose (exakte Bezeichnung: Cellulosenitrat [CN]) ist als wesentlicher Bestandteil vieler Lacksysteme bekannt (vgl. z.B. U. Biethan, Lacke und Lösemittel, Verlag Chemie GmbH, Weinheim, 1. Auflage, 1979, S. 8).

Da trockenes Cellulosenitrat sehr leicht durch Stoß oder Reibung zur Entzündung gebracht werden kann, müssen handelsübliche Lack-Cellulosenitrate entweder mit einem Phlegmatisierungsmittel (z.B. Anfeuchtungsmittel) in einer Menge von mindestens 25 Gew.-% oder einem gelatinierenden Weichmacher in einer Konzentration von mindestens 18 Gew.-% behandelt sein, um Gefahren bei Lagerung, Handhabung und Transport zu verringern.

Als Anfeuchtungsmittel werden neben Wasser im allgemeinen Alkohole, wie Ethanol, Isopropanol und Butanol, verwendet. Bei der Verarbeitung von NC-haltigen Lacken stören Alkohole allerdings in den üblichen Adsorptionsanlagen, die zur Emissions-reduzierung den Lackieranlagen nachgeschaltet sind. Außerdem stören Alkohole beim Einsatz in PUR-Lacken. Sie reagieren mit dem Isocyanat zu niedermolekularen Verbindungen, wodurch die Qualität des Lackfilms deutlich herabgesetzt wird.

In der DE-A 3 041 085 und in der US 3 284 253 werden Cellulosenitrate beschrieben, die als Anfeuchtungsmittel inerte Lösungsmittel (z.B. Toluol) enthalten. Die Herstellung erfolgt mittels eines destillativen Arbeitsschrittes, der außerordentlich aufwendig und sicherheitstechnisch problematisch ist.

Bei allen mit Anfeuchtungsmitteln versehenen Cellulosenitraten besteht weiterhin das Problem der Verdunstung des Anfeuchtungsmittels bzw. der inhomogenen Verteilung infolge Absackens des Anfeuchtungsmittels im Fass.

Damit der Anwender frei ist in der Auswahl der einsetzbaren Lösungsmittel, wird CN auch in plastifizierter Form (NC-Chips) angeboten. Die Herstellung dieser NC-Chips wird allgemein durch Einarbeitung von Weichmachern in das wasserfeuchte CN erreicht. Die Herstellung wird z.B. in der DE 1 203 652, DE 1 470 860 und DE 1 570 121 beschrieben.

Voraussetzung zur Herstellung von NC-Chips sind gelatinierende Weichmacher in reiner Form bzw. solche Weichmacher, die durch einen Zusatz von CN-lösenden organischen Lösungsmitteln gelatinierende Eigenschaften erhalten. Diese organischen Lösungsmittel werden beim Trocknen wieder entfernt. Daher sind bei diesen Verfahren umwelttechnologische Vorkehrungen notwendig.

Werden reine Weichmacher eingesetzt, so besteht hier folgendes Problem: Der Weichmacher wird mechanisch auf die CN-Faser aufgebracht und führt zunächst zu einer klebrigen, wasserfeuchten Masse. Je nach Gelatinierungsvermögen dieser Weichmacher verbleibt auch nach einer Trocknung eine klebrige Oberfläche, die dann unter üblichen Lagerbedingungen zu einem Verblocken, d. h. zu einem Zusammenkleben der NC-Chips zu größeren Agglomeraten, die die Größe des Gebindes erreichen können, führt. Solche zusammengeklebten NC-Chips zeigen eine unzureichende Rieselfähigkeit, und die Entleerung aus den Gebinden ist aus sicherheitstechnischen Gründen als problematisch anzusehen. Auch die Dosierbarkeit ist nicht mehr gegebenen, und die Lösezeit verlängert sich erheblich.

In der Praxis werden zur Herstellung solcher NC-Chips folgende Weichmacher ohne Zusatz von Hilfsstoffen, wie z.B. organischen Lösungsmitteln, eingesetzt: Phthalate, wie z.B. Dibutylphthalat (DBP). Bereits hier zeigt sich, dass das Gelatinierungsvermögen des DBP bei der NC-Chips-Herstellung unzureichend ist, um diese auch bei ungünstigen Lagerbedingungen (höhere Temperaturen, wie sie im Sommer und südlichen Ländern vorkommen) sicher verblockungsfrei zu halten. Bei Di-2-ethylhexylphthalat (DOP) verschlechtert sich das Gelatinierungsvermögen im Vergleich zum DBP, und die Verblockungstendenz tritt noch stärker auf. Auch beim epoxidierten Sojabohnenöl (ESO) liegt ein unzureichendes Gelatinierungsvermögen vor, und diese ESO-NC-Chips zeigen eine ausgeprägte Verblockungsneigung selbst bei Lagertemperaturen < 10°C. In der Praxis wird das Problem der unzureichenden Gelatinierung durch Zusatz von organischen Lösungsmitteln umgangen. Der Einsatz von Lösungsmittel erfordert einen hohen apparativen Aufwand zur Einhaltung der gesetzlich geforderten Emissionswerte und Explosionsgrenzen.

Durch die Einführung der Kennzeichnungspflicht des DBP's (Xi; mindergiftig) werden alternative unbedenkliche Weichmacher, wie z.B. Saccharoseacetatisobutyrat, in der Anbietungsform NC-Chips vom Markt verlangt. Diese Weichmacher sind allgemein hochviskos und zeigen ebenfalls ein zu geringes Gelatinierungsverhalten, so dass z.B. das Saccharoseacetatisobutyrat nur mit einem Lösungsmittelanteil von ca. 20 - 30 Gew.-% auf das CN aufzubringen ist.

Aufgabe der vorliegenden Erfindung ist es daher, CN-Weichmacherzubereitungen zur Verfügung zu stellen, die ohne Lösungsmittelzusätze nach den bekannten Verfahren herstellbar und verblockungsfrei lagerfähig sind.

Überraschend konnte das Problem dadurch gelöst werden, wenn diese beschriebenen Weichmacher A einen weiteren Weichmacher B enthalten, dadurch gekennzeichnet, dass dieser Weichmacher B durch folgenden spezifischen Carboxylgruppenwert C charakterisiert ist:

$$0.45 \leq C \leq 0{,}62$$

$$C = \frac{\text{Molmasse COO-Gruppe} \cdot f}{\text{Molmasse des Weichmachers B}}$$

f= Anzahl COO-Gruppen pro Molekül Weichmacher B

und dass B eine Molmasse $\geq$ 175 g/Mol aufweist.

Gegenstand der Erfindung sind NC-Chips, im wesentlichen bestehend aus CN mit einem $N_2$-Gehalt von weniger als 12,6 Gew.-% und einem Weichmachergemisch, worin mindestens ein Weichermacher B den erfindungsgemäßen Carboxylgruppenwert C erfüllt.

Zur Erzeugung der erfindungsgemäßen NC-Chips werden bevorzugt handelsübliche CN unterschiedlicher Viskositätsstufen mit einem $N_2$-Gehalt von 10,0 - 12,6 Gew.-% eingesetzt.

Bevorzugte CN-Weichmacherzubereitungen sind solche, die aus 82 - 40 Gew.-% CN und 60 - 18 Gew.-% einer Weichmacherkombination, die sich aufbaut aus 0,2 - 18 Gew.-%, vorzugsweise 0,2 - 8 Gew.-%, mindestens eines Weichmachers B und 17,8 - 59,8 Gew.-%, vorzugsweise 17,8 - 32 Gew.-%, mindestens eines Weichmachers A, bestehen.

Bei den Weichmachern B handelt es sich um Ester, bevorzugt basierend auf Glycerin, Trimethylolpropan und/ oder Pentaerythrit. Ether- und Hydroxygruppen können in diesen Weichmachern B als zusätzliche Gruppierungen vorhanden sein, wobei der spezifische Carboxylgruppenwert C eingehalten werden muss.

Als Beispiel für die Weichmacher B sind aufgeführt:

Glycerindiacetat, Glycerintriacetat, Trimethylolpropantriacetat, Acetate des Pentaerythrits, Umsetzungsprodukte des Glycerindiacetats mit kurzkettigen Dicarbonsäuren bzw. deren Anhydriden, wie z.B. Maleinsäureanhydrid.

Als übliche Weichmacher A sind beispielhaft aufgeführt:

Phthalate, wie z.B. DBP, DOP, Citronensäureester, wie z.B. Acetyltributylcitrat, Phosphorsäureester, wie z.B. 2-Ethyl-hexyl-di-phenylphosphat, Adipate, wie z.B. Diisobutyladipat, Sebacate, wie z.B. Dibutylsebacat, epoxidierte oder ethoxylierte Ester von natürlichen Fettsäuren bzw. Triglyceriden, wie z.B. epoxidiertes Sojabohnenöl (ESO) oder ethoxyliertes Rizinusöl, Zuckerderivate, wie z.B. Saccharoseacetatisobutyrat und

Polyester, wie z.B. von mehrwertigen Carbonsäuren und mindestens einem mehrwertigen Alkohol.

Die Einarbeitung dieser Weichmachergemische erfolgt nach den üblichen Verfahren zur Herstellung von NC-Chips. Als Beispiel ist hier das Aufdüsen auf das wasserfeuchte CN in einem nicht verdichtend wirkenden Mischer genannt (s. DE 1 203 652).

Ein weiterer Gegenstand der Erfindung ist die Verwendung solcher NC-Chips als Lackrohstoff zum Beschichten von starren und flexiblen Substraten, wobei diese je nach Applikationsart und Anforderungsprofil mit weiteren Lackrohstoffen kombiniert werden können. Beispielhaft sind zu nennen die Verwendung der erfindungsgemäßen Lackbindemittelzubereitungen in Holz-, Papier-, Leder-, Textil-, Metall-, Folien- Lacken sowie Druckfarben.

## Beispiele

Die Herstellung der Nitrocellulose-Chips erfolgt nach einem in der DE 1 203 652 ausführlich beschriebenen Verfahren. Dabei wird auf Cellulosenitrate unterschiedlicher Normtypen (eingesetzt mit, einem Wassergehalt von 35 Gew.-%) mindestens 18 Gew.-% eines Weichmachers A bzw. eines Weichmachergemisches A und B aufgebracht (vgl. Tabelle 1). Die mit (v) gekennzeichneten Beispiele sind als Vergleichsbeispiele zu betrachten.

Zum Überprüfen der Verblockungsneigung werden die NC-Chips in einem Pappzylinder (Durchmesser: 10 cm, Höhe: 20 cm) unter Rütteln eingefüllt (Füllhöhe: 15 cm) und mit einem 2 kg schweren Metallstempel (Durchmesser: 9,5 cm) belastet. Die Belastung wird über 7 Tage bei 40°C durchgeführt. Nach Abkühlen der NC-Chips auf Raumtemperatur wird das Zusammensacken (= Füllhöhe nach Belastung) und das Ausschüttverhalten beurteilt. Es hat sich gezeigt, dass die Füllhöhe um so stärker abnimmt, je größer die Verblockungsneigung der NC-Chpis ist.

Die Ergebnisse sind in der Tabelle 2 aufgeführt.

Tabelle 1:

| Beispiele | | | | |
|---|---|---|---|---|
| Beispiel | NC-Normtype DIN 53 170 | Weichmacher A | Weichmacher B | Carboxylgruppenwert des Weichmacher B |
| I | E 24 | 14 % epoxidiertes Sojabohnenöl | 4 % Glycerintriacetat | 0,61 |
| 2 | E 24 | 16 % epoxidiertes Sojabohnenöl | 8 % Glycerintriacetat | 0,61 |

Tabelle 1:   (fortgesetzt)

| Beispiele | | | | |
|---|---|---|---|---|
| Beispiel | NC-Normtype DIN 53 170 | Weichmacher A | Weichmacher B | Carboxylgruppenwert des Weichmacher B |
| 3 (v) | E 24 | 18 % epoxidiertes Sojabohnenöl | - | - |
| 4 | M 36 | 16 % epoxidiertes Sojabohnenöl | 2 % Glycerintriacetat | 0,61 |
| 5 | M 36 | 16 % epoxidiertes Sojabohnenöl | 2 % Glycerindiacetat | 0,50 |
| 6 | M 36 | 18 % epoxidiertes Sojabohnenöl | 8 % Glycerintriacetat | 0,61 |
| 7 | E 9 | 16 % epoxidiertes Sojabohnenöl | 4 % Trimethylolpropantriacetat | 0,51 |
| 8 (v) | E 9 | 18 % epoxidiertes Sojabohnenöl | - | - |
| 9 | E 34 | 15 % Acetyltributylcitrat | 3 % Glycerintriacetat | 0,61 |
| 10 (v) | E 34 | 18 % Acetyltributylcitrat | - | - |
| 11 | M 36 | 15 % 2-Ethylhexyldiphenylphosphat | 3 % Glycerintriacetat | 0,61 |
| 12 (v) | M 36 | 18 % 2-Ethylhexyldiphenylphosphat | - | - |
| 13 | M 36 | 16% Saccharoseacetatisobutyrat | 2 % Glycerintriacetat | 0,61 |
| 14 | M 36 | 25 % Saccharoseacetatisobutyrat | 5 % Trimethylolpropantriacetat | 0,51 |
| 15 | A 30 | 15 % Saccharoseacetatisobutyrat | 3 % Glycerindiacetat | 0,50 |
| 16 | A 30 | 16% Dibutylphthalat | 2 % Glycerintriacetat | 0,61 |
| 17 (v) | A 30 | 18 % Dibutylphthalat | - | - |
| 18 | E 27 | 16 % Dibutylphthalat | 2 % Glycerintriacetat | 0,61 |
| 19 (v) | E 27 | 18 % Dibutylphthalat | - | - |
| 20 | A 30 | 25 % Desmophen 1300* | 5 % Glycerintriacetat | 0,61 |

\* Desmophen 1300 _ Polyesterharz der Fa. Bayer AG

Tabelle 2:

| Ermittlung des Verblockungs- und Ausschüttverhaltens | | |
|---|---|---|
| Beispiel | Füllhöhe nach Belastung | Ausschüttverhalten |
| 1 | 12 | 2 |
| 2 | 12,5 | 1 |
| 3 | 10 | 5 |
| 4 | 12 | 3 |
| 5 | 12 | 3 |
| 6 | 13 | 1 |
| 7 | 12,5 | 2 |
| 8 | 10,5 | 5 |
| 9 | 12 | 2 |
| 10 | 11 | 4 |
| 11 | 12 | 2 |
| 12 | 11 | 5 |

Tabelle 2:  (fortgesetzt)

| Ermittlung des Verblockungs- und Ausschüttverhaltens | | |
| --- | --- | --- |
| Beispiel | Füllhöhe nach Belastung | Ausschüttverhalten |
| 13 | 13,5 | 1 |
| 14 | 14,5 | 1 |
| 15 | 14 | 1 |
| 16 | 12 | 2 |
| 17 | 11 | 5 |
| 18 | 12,5 | 2 |
| 19 | 11 | 5 |
| 20 | 14 | 1 |
| 1 $\underline{\Delta}$ frei fließend<br>2 $\underline{\Delta}$ frei fließend, kleinere Agglomerate vorhanden<br>3 $\underline{\Delta}$ nach leichtem Klopfen frei fließend, Agglomerate vorhanden<br>4 $\underline{\Delta}$ nach kräftigem Klopfen teilweise fließend, große Agglomerate vorhanden<br>5 $\underline{\Delta}$ vollständig verblockt | | |

**Patentansprüche**

1. Lösungsmittelfreie Cellulosenitrat-Weichmacherzubereitungen enthaltend einen an sich bekannten Weichmacher A sowie einen weiteren Weichmacher B, dadurch gekennzeichnet, daß dieser Weichmacher B durch folgenden spezifischen Carboxylgruppenwert C charakterisiert ist:

$$0{,}45 \leq C \leq 0{,}62$$

$$C = \frac{\text{Molmasse COO-Gruppe} \cdot f}{\text{Molmasse des Weichmachers B}}$$

f = Anzahl COO-Gruppen pro Molekül Weichmacher B und daß B
eine Molmasse von größer/gleich 175 g/Mol aufweist.

2. Cellulosenitrat-Weichmacherzubereitungen gemäß Anspruch 1, dadurch gekennzeichnet, daß Weichmacher B Ester, basierend auf Glycerin, Trimethylolpropan und/oder Pentaerythrit sind.

3. Verwendung von Cellulosenitrat-Weichmacherzubereitungen gemäß einem der Ansprüche 1 oder 2 zur Herstellung von NC-Chips für Lackrohstoffe.

**Claims**

1. Solvent-free cellulose nitrate/plasticiser preparations containing a per *se* known plasticiser A together with another plasticiser B, characterised in that this plasticiser B is characterised by the following specific carboxyl group value C:

$$0.45 \leq C \leq 0.62$$

$$C = \frac{\text{molar mass of COO group} \cdot f}{\text{molar mass of plasticiser B}}$$

f = number of COO groups per molecule of plasticiser B and in that B
has a molar mass of greater than or equal to 175 g/mol.

2. Cellulose nitrate/plasticiser preparations according to claim 1, characterised in that plasticiser B comprises esters based on glycerol, trimethylolpropane and/or pentaerythritol.

3. Use of cellulose nitrate/plasticiser preparations according to one of claims 1 or 2 for the production of NC chips for lacquer raw materials.

**Revendications**

1. Préparations nitrate de cellulose-plastifiants sans solvant contenant un plastifiant A connu en soi ainsi qu'un autre plastifiant B caractérisées en ce que ce plastifiant B est caractérisé par l'indice de groupes carboxyle spécifique C suivant :

$$0{,}45 \leq C \leq 0{,}62$$

$$C = \frac{\text{masse molaire du groupe COO.f}}{\text{masse molaire du plastifiant B}}$$

f = nombre de groupes COO par molécule de plastifiant B
et en ce que B a une masse molaire $\geq$ 175 g/mol.

2. Préparations nitrate de cellulose-plastifiants selon la revendication 1 caractérisées en ce que le plastifiant B est constitué par des esters à base de glycérine, de triméthylolpropane et/ou de pentaérythritol.

3. Utilisation de préparations nitrate de cellulose-plastifiants selon l'une des revendications 1 et 2 pour la production d'écailles de NC pour matières premières de peintures.